# FASCICULE DE BREVET EUROPEEN

(11) **EP 1 567 754 B1**
(45) Date de publication et mention de la délivrance du brevet: **19.07.2006**
(21) Numéro de dépôt: 03775455.3
(22) Date de dépôt: 29.09.2003
(51) Int. Cl.: F02B 29/04, F02M 25/07

(54) **DISPOSITIF PERFECTIONNE DE REGULATION THERMIQUE DE L'AIR D'ADMISSION D'UN MOTEUR ET DE GAZ D'ECHAPPEMENT RECIRCULES EMIS PAR CE MOTEUR**
VERBESSERTE VORRICHTUNG ZUR THERMISCHEN REGELUNG VON DER ANSAUGLUFT EINER BRENNKRAFTMASCHINE UND RÜCKGEFÜHRTEM BRENNKRAFTMASCHINENABGAS
DEVICE FOR THE THERMAL REGULATION OF THE INTAKE AIR FOR AN ENGINE AND THE RECIRCULATED EXHAUST GAS EMITTED BY SAID ENGINE

(30) Priorité: 12.11.2002 FR 0214121
(43) Date de publication de la demande: 31.08.2005
(73) Titulaire: Peugeot Citroen Automobiles S.A., 92200 Neuilly-Sur-Seine (FR)
(72) Inventeur: TOMASELLI, Ludovic, 92400 Courbevoie (FR)
(74) Mandataire: de la Bigne, Guillaume Michel Marie
(86) Numéro de dépôt international: PCT/FR2003/002857
(87) Numéro de publication internationale: WO 2004/044401

(56) Documents cités:
- EP-A- 0 718 481
- EP-A- 1 201 890
- DE-C- 19 716 566
- US-A- 5 617 726

## Description

La présente invention concerne un dispositif perfectionné de régulation thermique de l'air d'admission d'un moteur et de gaz d'échappement recirculés émis par ce moteur.

Elle s'applique en particulier à la régulation thermique d'un mélange d'admission d'un moteur à combustion interne suralimenté raccordé à une ligne d'échappement munie d'un filtre à particules.

On souhaite refroidir l'air d'admission d'un moteur notamment lorsque ce dernier est suralimenté au moyen d'un ensemble turbo-compresseur muni, d'une part, d'une turbine entraînée par des gaz d'échappement du moteur, agencée en aval du moteur, et d'autre part, d'un compresseur d'air d'admission agencé en amont du moteur. En effet, l'air d'admission du moteur, se réchauffant dans le compresseur, doit être refroidi à la sortie de ce compresseur afin d'optimiser les performances du moteur et minimiser les émissions de polluants. En effet, l'abaissement de la température de l'air d'admission accroît la densité de cet air. L'augmentation de cette densité accroît la quantité d'air admise dans les cylindres et la puissance du moteur.

On souhaite réchauffer l'air d'admission d'un moteur notamment lorsque ce dernier est raccordé à une ligne d'échappement munie d'un filtre à particules. Ce filtre doit être régénéré périodiquement afin d'éliminer les particules de suie qui s'y accumulent. La régénération est réalisée par chauffage de l'air d'admission jusqu'à une température suffisante pour provoquer la combustion des particules de suie.

Par ailleurs, dans certains types de moteur, une partie des gaz d'échappement est remise en circulation avec l'air d'admission. Ces gaz d'échappement sont communément appelés gaz d'échappement recirculés EGR (Exhaust Gaz Recycling). Ces derniers, mélangés avec l'air d'admission à l'aide de moyens appropriés, sont renvoyés vers le moteur.

On souhaite réguler la température des gaz d'échappement recirculés dans le but notamment d'abaisser la température de ces gaz avant d'être mélangés à l'air d'admission et renvoyés vers le moteur.

On connaît déjà dans l'état de la technique un dispositif de régulation thermique de l'air d'admission d'un moteur à combustion interne de véhicule automobile, formant un premier fluide à calo-réguler, et de gaz d'échappement recirculés émis par le moteur, formant un second fluide à calo-réguler, du type comprenant :
des premiers moyens d'échange thermique entre un liquide caloporteur et l'air d'admission, et
des seconds moyens d'échange thermique entre un liquide caloporteur et les gaz d'échappement recirculés.

Habituellement, le refroidissement de l'air d'admission est réalisé par un échangeur thermique air/air d'admission, placé dans une face avant du véhicule.

Par ailleurs, le réchauffage de l'air d'admission est réalisé par un échangeur thermique liquide caloporteur/air d'admission, placé dans la face avant du véhicule. Cet échangeur liquide caloporteur/air d'admission fait donc partie des premiers moyens d'échange thermique entre un liquide caloporteur et l'air d'admission, identifiés ci-dessus.

Enfin, le refroidissement des gaz d'échappement recirculés est réalisé par un échangeur thermique liquide caloporteur/gaz d'échappement recirculés, jouxtant le moteur. Cet échangeur liquide caloporteur/gaz d'échappement recirculés fait donc partie des seconds moyens d'échange thermique entre un liquide caloporteur et les gaz d'échappement recirculés, identifiés ci-dessus.

La régulation thermique de l'air d'admission et des gaz d'échappement recirculés est donc réalisée à l'aide de trois échangeurs et de multiples moyens de contrôle des débits des fluides calo-régulés associés à ces échangeurs.

Le nombre d'échangeurs et leurs localisations diverses (face avant, zone contiguë au moteur) confère au dispositif de régulation thermique une relative complexité notamment en imposant une ligne d'air d'admission relativement longue conduisant à des pertes de charges conséquentes.

De plus, les moyens de régulation des débits des fluides calo-régulés n'autorisent généralement la circulation de l'air d'admission qu'à travers l'un ou l'autre des deux échangeurs thermiques air/air d'admission et liquide caloporteur/air d'admission en empêchant une influence simultanée de ces deux échangeurs sur l'air d'admission.

L'invention a notamment pour but d'optimiser la structure et le fonctionnement d'un dispositif de régulation thermique du type précité.

DE 42 40 239 décrit un dispositif de régulation thermique de l'air d'admission d'un moteur à combustion interne de véhicule automobile, formant un premier fluide à calo-réguler, et de gaz d'échappement recirculés émis par le moteur, formant un second fluide à calo-réguler, du type comprenant :
- un échangeur thermique principal muni de moyens de canalisation de liquide caloporteur pour échange thermique avec au moins un des fluides à calo-réguler, et
- des moyens de dérivation de cet échangeur principal dans lesquels est destiné à circuler un mélange d'air d'admission et de gaz d'échappement recirculés comprenant une extrémité amont et une extrémité aval raccordées respectivement en amont et en aval de l'échangeur principal.

L'invention a pour objet un dispositif de régulation thermique de l'air d'admission d'un moteur à combustion interne de véhicule automobile, formant un premier fluide à calo-réguler, et de gaz d'échappement recirculés émis par le moteur, formant un second fluide à calo-réguler, du type décrit dans DE 42 40 239, **caractérisé en ce que** ces moyens de canalisation de liquide caloporteur comprennent :
- des moyens principaux de canalisation de liquide caloporteur raccordés à un échangeur thermique liquide caloporteur/air, dit échangeur froid, par l'intermédiaire d'un circuit principal de liquide caloporteur, et
- des moyens secondaires de canalisation de liquide caloporteur pour échange thermique avec au moins un des fluides à calo-réguler, ces moyens :de: canalisation secondaires étant raccordés à un circuit secondaire dans lequel circule un liquide caloporteur destiné au refroidissement du moteur à combustion interne.

L'invention permet dons de simplifier la structure du dispositif de régulation thermique du fait notamment que
- l'échangeur thermique principal regroupe les premiers moyens d'échange thermique entre le liquide caloporteur et l'air d'admission et les seconds moyens d'échange thermique entre le liquide caloporteur et les gaz d'échappement recirculés ;
- les moyens de dérivation autorisent la dérivation du mélange d'air d'admission et de gaz d'échappement recirculés.

Cette simplification, qui se traduit par un abaissement du coût du dispositif de régulation thermique, facilite l'intégration de ce dispositif de régulation dans le véhicule. L'échangeur principal pourra avantageusement être agencé à l'entrée du collecteur d'admission du moteur.

Grâce à l'invention, la ligne d'air d'admission est relativement courte si bien que les pertes de charge sont faibles. La conduite du véhicule est plus agréable du fait d'une optimisation des performances du moteur se traduisant par des reprises efficaces.

La simplification de la structure du dispositif de régulation thermique simplifie d'autant les moyens de régulation des débits de fluides calo-régulateur et calo-régulés. De ce fait, les émissions polluantes des moteurs, notamment de type Diesel, (HC, CO, NOx, particules, etc.) sont réduites par l'optimisation de ia composition, du débit et de la température du mélange d'admission comprenant l'air d'admission et les gaz recirculés.

Suivant d'autres caractéristiques optionnelles de différents modes de réalisation de ce dispositif :
- l'échangeur thermique principal est muni d'une partie de canalisation commune des deux fluides à calo-réguler ;
- la partie de canalisation commune comporte une extrémité amont raccordée, à la fois, à une arrivée d'air d'admission, une arrivée de gaz d'échappement recirculés et une extrémité amont des moyens de dérivation ;
- l'arrivée d'air d'admission, l'arrivée de gaz d'échappement recirculés et l'extrémité amont des moyens de dérivation sont munis chacun de moyens de réglage du débit du fluide qui les traverse ;
- la partie de canalisation commune comporte une extrémité amont raccordée à une première sortie de moyens de répartition d'un mélange d'air d'admission et de gaz d'échappement recirculés, ces moyens de répartition du mélange comprenant de plus, d'une part, une entrée commune à des arrivées d'air d'admission et de gaz d'échappement recirculés et, d'autre part, une seconde sortie raccordée à une extrémité amont des moyens de dérivation, l'arrivée de gaz d'échappement recirculés étant munie de moyens de réglage du débit de gaz recirculés ;
- l'échangeur thermique principal est muni de deux parties destinées à canaliser chacune un fluide à calo-réguler séparément de l'autre fluide à calo-réguler ;
- l'échangeur thermique principal est muni de moyens de mise en communication occasionnelle des deux parties de canalisation de façon à autoriser, soit le passage d'un seul et même fluide à calo-réguler à la fois dans ces deux parties, soit le mélange et le passage des deux fluides à calo-réguler à la fois dans ces deux parties ;
- le fluide à calo-réguler autorisé à passer seul dans les deux parties de canalisation à la fois est l'air d'admission ;
- les moyens principaux de canalisation de liquide caloporteur ne s'étendent que dans la partie de canalisation de l'air d'admission ;
- les moyens principaux de canalisation de liquide caloporteur s'étendent dans les deux parties de canalisation de l'air d'admission et des gaz recirculés ;
- les moyens secondaires de canalisation de liquide caloporteur s'étendent dans les deux parties de canalisation de l'air d'admission et des gaz d'échappement recirculés ;
- la partie de canalisation de l'air d'admission comporte une extrémité amont raccordée à une première sortie de moyens de répartition d'air d'admission, ces moyens de répartition de l'air d'admission comprenant de plus, d'une part, une entrée d'air d'admission et, d'autre part, une seconde sortie raccordée à une extrémité amont des moyens de dérivation ;
- la partie de canalisation des gaz d'échappement recirculés comporte une extrémité amont raccordée à une première sortie de moyens de répartition de gaz d'échappement recirculés, ces moyens de répartition de gaz recirculés comprenant de plus, d'une part, une entrée de gaz d'échappement recirculés et, d'autre part, une seconde sortie raccordée à une extrémité amont des moyens de dérivation ;
- l'échangeur thermique principal est muni de moyens supplémentaires de canalisation de fluide caloporteur pour échange thermique avec au moins un des fluides à calo-réguler, ces moyens de canalisation supplémentaires étant raccordés à un circuit de fluide dit très froid ;
- le circuit de fluide très froid est couplé thermiquement à une pompe à chaleur ;
- l'air d'admission est entraîné, à une pression supérieure à la pression atmosphérique, à travers l'échangeur thermique principal par un ensemble turbo-compresseur muni d'une turbine entraînée par les gaz d'échappement du moteur à combustion interne ;
- le moteur à combustion interne , par exemple de type Diesel, est raccordé à un circuit d'échappement muni d'un filtre à particules ;
- le liquide caloporteur est un mélange d'eau et d'antigel.

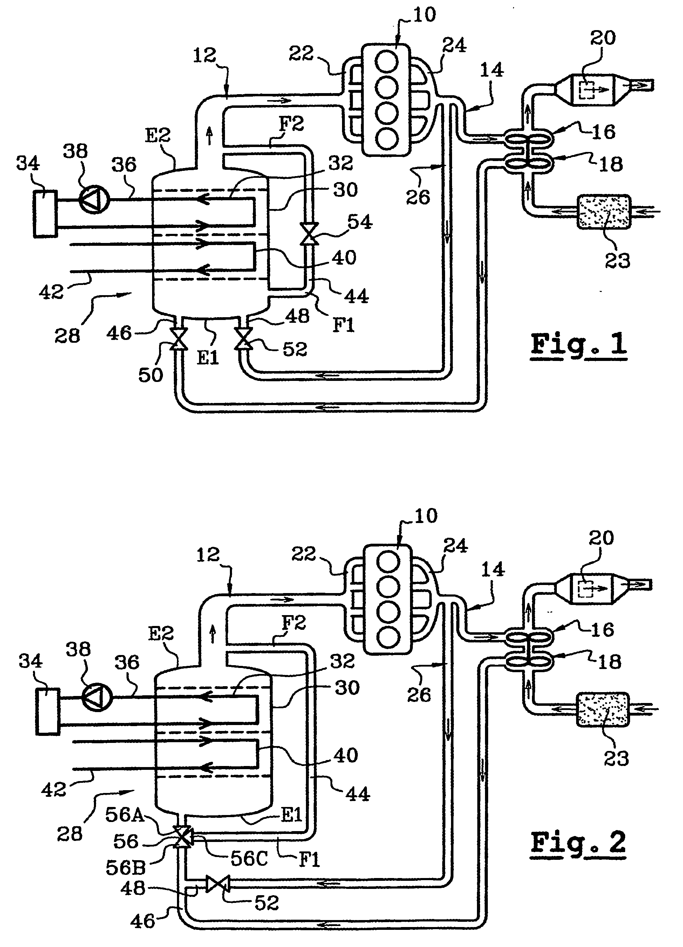

L'invention sera mieux comprise à la lecture de la description qui va suivre, donnée uniquement à titre d'exemple et faite en se référant aux dessins dans lesquels les figures 1 à 6 sont des vues schématiques d'un moteur à combustion interne raccordé à des moyens amont formant circuit d'admission d'air, munis d'un dispositif de régulation thermique selon des premier à sixième modes de réalisation de l'invention, et à des moyens aval formant ligne d'échappement.

On a représenté sur les figures un moteur à combustion interne 10 de véhicule automobile, par exemple de type Diesel, raccordé à des moyens amont formant un circuit 12 d'admission d'air dans le moteur 10 et à des moyens aval formant un circuit d'échappement 14.

Le moteur 10 est suralimenté au moyen d'un ensemble turbo-compresseur muni, d'une part, d'une turbine 16 entraînée par des gaz d'échappement du moteur 10, agencée en aval du moteur 10 dans le circuit d'échappement 14, et d'autre part, d'un compresseur 18 d'air d'admission agencé en amont du moteur 10 dans le circuit 12 d'admission d'air. La turbine 16 et le compresseur 18 sont couplés en rotation entre eux de façon connue en soi.

Le circuit d'échappement 14 est muni d'un filtre à particules classique 20.

Le circuit d'admission 12 est raccordé au moteur 10 par un collecteur d'admission 22 formant l'extrémité aval de ce circuit 12.

En amont du compresseur 18, le circuit d'admission 12 comporte un filtre à air classique 23.

Le circuit d'échappement 14 est raccordé au moteur 10 par un collecteur d'échappement 24 formant l'extrémité amont de ce circuit 14.

On a également représenté sur la figure 1 un circuit 26 de gaz d'échappement recirculés comportant une extrémité amont raccordée à la sortie du collecteur d'échappement 24.

Les températures de l'air d'admission et des gaz d'échappement recirculés sont régulées au moyen d'un dispositif 28 de régulation thermique selon l'invention dont six modes de réalisation sont représentés respectivement sur les figures 1 à 6. On notera que sur ces figures les éléments analogues sont désignés par des références identiques.

Dans ce qui suit, deux organes sont dits couplés thermiquement entre eux lorsqu'ils échangent de la chaleur entre eux au moyen d'un échangeur thermique approprié.

On se référera ci-dessous au dispositif de régulation thermique 28 selon le premier mode de réalisation de l'invention illustré sur la figure 1.

Le dispositif de régulation thermique 28 comprend un échangeur thermique principal 30 liquides caloporteurs/fluides à calo-réguler. De préférence, les liquides caloporteurs sont constitués chacun par un mélange d'eau et d'antigel.

L'air d'admission est entraîné à travers l'échangeur principal 30, à une pression supérieure à la pression atmosphérique, par l'ensemble turbo-compresseur.

L'échangeur thermique principal 30 forme, à la fois :
- des premiers moyens d'échange thermique entre un liquide caloporteur et l'air d'admission (premier fluide à calo-réguler), et
- des seconds moyens d'échange thermique entre le liquide caloporteur et les gaz d'échappement recirculés (second fluide à calo-réguler).

Dans le premier mode de réalisation du dispositif de régulation 28 illustré sur la figure 1, l'échangeur thermique principal 30 est muni d'une partie de canalisation commune des deux fluides à calo-réguler. Cette partie commune autorise donc la circulation d'un mélange d'air d'admission et de gaz d'échappement recirculés à travers l'échangeur principal 30.

Par rapport au sens d'écoulement des deux fluides à calo-réguler, l'échangeur thermique principal 30 comprend une extrémité amont E1 et une extrémité aval E2 raccordée au collecteur d'admission 22. Ces extrémités amont E1 et aval E2 forment également les extrémités amont et aval de la partie de circulation commune des deux fluides à calo-réguler.

L'échangeur thermique principal 30 est muni de moyens principaux 32 de canalisation de liquide caloporteur pour échange thermique avec le mélange d'air d'admission et de gaz d'échappement recirculés s'écoulant dans la partie de canalisation commune.

Les moyens de canalisation principaux 32 sont raccordés à un échangeur thermique classique 34 liquide caloporteur/air, dit échangeur froid 34, par l'intermédiaire d'un circuit principal 36 de liquide caloporteur.

Le liquide caloporteur est mis en circulation dans le circuit principal 36 par une pompe 38, de préférence électrique.

L'échangeur thermique principal 30 est muni également de moyens secondaires 40 de canalisation de liquide caloporteur pour échange thermique avec le mélange d'air d'admission et de gaz d'échappement recirculés s'écoulant dans la partie de canalisation commune.

De préférence, les moyens de canalisation secondaires 40 sont raccordés à un circuit secondaire 42 dans lequel circule un liquide caloporteur destiné au refroidissement du moteur à combustion interne 10. Le liquide caloporteur est mis en circulation dans le circuit secondaire 42 par une pompe, généralement entraînée par le moteur à combustion interne 10, d'un circuit de refroidissement du moteur.

Les moyens secondaires 40, canalisant le liquide caloporteur destiné au refroidissement du moteur 10 à travers l'échangeur principal 30, sont agencés en amont des moyens principaux 32 en considérant le sens d'écoulement des fluides à calo-réguler dans l'échangeur principal 30. Les moyens secondaires 40, en permettant un pré-refroidissement des fluides à calo-réguler traversant l'échangeur principal 30, autorisent la limitation des dimensions de l'échangeur thermique 34 raccordé au circuit principal 36.

Dans certaines conditions de fonctionnement du véhicule, en particulier en cas de saison très froide, les moyens secondaires 40 de canalisation de liquide caloporteur peuvent être utilisés pour réchauffer l'air d'admission traversant l'échangeur principal 30.

Les moyens secondaires 40 de canalisation de liquide caloporteur peuvent éventuellement être supprimés si l'échangeur 34 liquide caloporteur/air a une taille suffisante pour évacuer les calories provenant des fluides à calo-réguler.

Le dispositif de régulation thermique 28 comprend des moyens 44 de dérivation de l'échangeur principal 30 dans lesquels est destiné à circuler le mélange d'air d'admission et de gaz d'échappement recirculés.

Par rapport au sens d'écoulement du mélange d'air d'admission et de gaz recirculés, les moyens de dérivation 44 comprennent une extrémité amont F1 et une extrémité aval F2 raccordée, comme l'extrémité aval E2 de l'échangeur principal 30, au collecteur d'admission 22.

L'extrémité amont E1 de l'échangeur principal 30 est raccordée, à la fois, à une arrivée 46 d'air d'admission du circuit 12, une arrivée 48 de gaz d'échappement recirculés du circuit 26 et l'extrémité amont F1 des moyens de dérivation 44.

Dans le mode de réalisation illustré sur la figure 1, l'arrivée 46 d'air d'admission, l'arrivée 48 de gaz d'échappement recirculés et l'extrémité amont F1 des moyens de dérivation 44 sont munis chacun de moyens 50, 52, 54 de réglage du débit du fluide qui les traverse.

On décrira ci-dessous quelques exemples de configurations de fonctionnement du dispositif de régulation thermique 28 selon le premier mode de réalisation de l'invention. Ces exemples montrent comment la température des fluides à calo-réguler peut être réglée en réglant le débit de la pompe 38 et les moyens de réglage 54 influençant le débit de l'air d'admission ou du mélange air d'admission-gaz d'échappement recirculés à travers les moyens de dérivation 44.

### Exemple 1 : Configuration du dispositif de régulation thermique 28 adaptée pour refroidir l'air d'admission et pour le roulage du véhicule à grande vitesse.

Dans ce cas, les moyens 50 sont réglés de façon à autoriser le passage d'air d'admission dans l'échangeur principal 30 et ainsi refroidir l'air d'admission. Les moyens 52 sont réglés de façon à interdire le passage de gaz d'échappement recirculés dans l'échangeur principal 30. Les moyens 54 sont réglés de façon à interdire le passage d'air d'admission à travers les moyens de dérivation 44. Le débit de la pompe 38 du circuit principal est réglé au maximum.

### Exemple 2 : Configuration du dispositif de régulation thermique 28 adaptée pour refroidir l'air d'admission et pour le roulage du véhicule en ville.

Dans ce cas, à la différence de l'exemple 1, les moyens 52 sont réglés de façon à autoriser le passage de gaz d'échappement recirculés dans l'échangeur principal 30 et ainsi refroidir les gaz d'échappement recirculés.

### Exemple 3 : Configuration du dispositif de régulation thermique 28 adaptée pour réchauffer l'air d'admission, notamment dans un but de régénération du filtre à particules 20.

Dans ce cas, les moyens 50 sont réglés de façon à autoriser le passage d'air d'admission dans l'échangeur principal 30. Les moyens 52 sont réglés de façon à interdire le passage de gaz d'échappement dans l'échangeur principal 30. Les moyens 54 sont réglés de façon à autoriser le passage d'air d'admission à travers les moyens de dérivation 44. Le débit de la pompe 38 est réglé au minimum.

### Exemple 4 : Configuration du dispositif de régulation thermique 28 adaptée pour réchauffer l'air d'admission, notamment dans un but de régénération du filtre à particules 20, et pour mélanger des gaz d'échappement recirculés à l'air d'admission.

Dans ce cas, à la différence de l'exemple 3, les moyens 52 sont réglés de façon à autoriser le passage de gaz d'échappement recirculés dans l'échangeur principal 30. Un mélange d'air d'admission et de gaz d'échappement recirculés s'écoule à travers les moyens de dérivation 44.

On notera, dans les cas des exemples 3 et 4, que les moyens 54 étant réglés de façon à autoriser le passage de fluides à travers les moyens de dérivation 44, 90% de l'air d'admission ou du mélange d'air d'admission et de gaz recirculés est susceptible de passer à travers les moyens de dérivation 44, compte-tenu des pertes de charge dans l'échangeur principal 30.

Dans le deuxième mode de réalisation du dispositif de régulation 28 illustré sur la figure 2, l'extrémité amont E1 de l'échangeur principal 30 est raccordée à une première sortie 56A de moyens 56 de répartition d'un mélange d'air d'admission et de gaz d'échappement recirculés.

Ces moyens de répartition 56 du mélange comprennent de plus, d'une part, une entrée 56B commune aux arrivées d'air d'admission 46 et de gaz d'échappement recirculés 48 et, d'autre part, une seconde sortie 56C raccordée à l'extrémité amont F1 des moyens de dérivation 44.

Comme dans le mode de réalisation précédent, l'arrivée 48 de gaz d'échappement recirculés est munie des moyens 52 de réglage du débit des gaz d'échappement recirculés.

On décrira ci-dessous quelques exemples de configurations de fonctionnement du dispositif de régulation thermique 28 selon le deuxième mode de réalisation de l'invention. Ces exemples montrent comment la température des fluides à calo-réguler peut être réglée en réglant le débit de la pompe 38 et les moyens de répartition 56 influençant le débit de l'air d'admission ou du mélange air d'admission-gaz d'échappement recirculés à travers les moyens de dérivation 44.

### Exemple 1 : Configuration du dispositif de régulation thermique 28 adaptée pour refroidir l'air d'admission et pour le roulage du véhicule à grande vitesse.

Dans ce cas, les moyens de répartition 56 sont réglés de façon à autoriser le passage d'air d'admission dans l'échangeur principal 30 et ainsi refroidir l'air d'admission. Les moyens 52 sont réglés de façon à interdire le passage de gaz d'échappement recirculés dans les moyens de répartition 56 et donc dans l'échangeur principal 30. Le débit de la pompe 38 du circuit principal est réglé au maximum.

### Exemple 2 : Configuration du dispositif de régulation thermique 28 adaptée pour refroidir l'air d'admission et pour le roulage du véhicule en ville.

Dans ce cas, à la différence de l'exemple 1, les moyens 52 sont réglés de façon à autoriser le passage de gaz d'échappement recirculés dans les moyens de répartition 56 et donc dans l'échangeur principal 30 et ainsi refroidir les gaz d'échappement recirculés.

### Exemple 3 : Configuration du dispositif de régulation thermique 28 adaptée pour réchauffer l'air d'admission, notamment dans un but de régénération du filtre à particules 20.

Dans ce cas, les moyens de répartition 56 sont réglés de façon à autoriser le passage d'air d'admission dans les moyens de dérivation 44. Les moyens 52 sont réglés de façon à interdire le passage de gaz d'échappement recirculés dans les moyens de répartition 56 et donc dans l'échangeur principal 30. Le débit de la pompe 38 est réglé au minimum.

### Exemple 4 : Configuration du dispositif de régulation thermique 28 adaptée pour réchauffer l'air d'admission, notamment dans un but de régénération du filtre à particules 20, et pour mélanger des gaz d'échappement recirculés à l'air d'admission.

Dans ce cas, à la différence de l'exemple 3, les moyens 52 sont réglés de façon à autoriser le passage de gaz d'échappement recirculés dans les moyens de répartition 56. Ces derniers sont réglés de façon à autoriser le passage du mélange d'air d'admission et de gaz d'échappement recirculés à travers les moyens de dérivation 44.

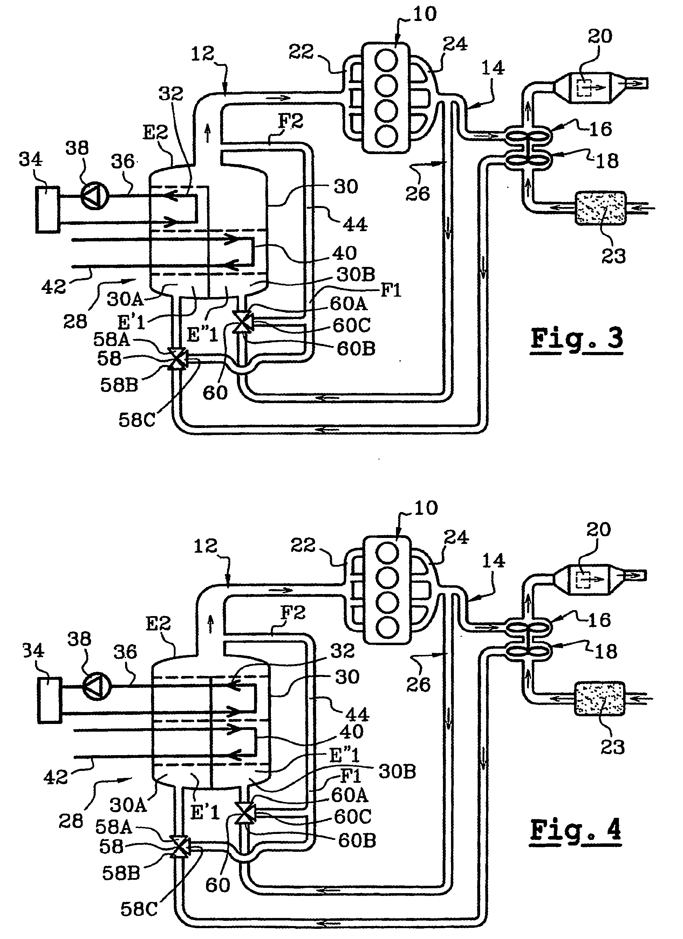

Dans les troisième à cinquième modes de réalisation du dispositif de régulation 28, l'échangeur thermique principal est muni de deux parties 30A, 30B canalisant chacune un fluide à calo-réguler séparément de l'autre fluide à calo-réguler. Dans les exemples illustrés sur les figures 3 à 5, la première partie 30A de l'échangeur principal est destinée à la canalisation de l'air d'admission et la seconde partie 30B de l'échangeur principal est destinée à la canalisation des gaz d'échappement recirculés. L'air d'admission et les gaz d'échappement recirculés se mélangent dans l'extrémité aval E2 de l'échangeur principal 30.

Dans le troisième mode de réalisation du dispositif de régulation 28 illustré sur la figure 3, les moyens principaux 32 de canalisation de liquide caloporteur ne s'étendent que dans la première partie 30A de canalisation de l'air d'admission.

La première partie 30A de canalisation de l'air d'admission comporte une extrémité amont E'1 raccordée à une première sortie 58A de moyens 58 de répartition d'air d'admission.

Ces moyens 58 de répartition de l'air d'admission comprennent de plus, d'une part, une entrée 58B d'air d'admission raccordée au circuit 12 et, d'autre part, une seconde sortie 58C raccordée à l'extrémité amont F1 des moyens de dérivation 44.

La seconde partie 30B de canalisation des gaz d'échappement recirculés comporte une extrémité amont E"1 raccordée à une première sortie 60A de moyens de répartition 60 de gaz d'échappement recirculés.

Ces moyens 60 de répartition de gaz recirculés comprennent de plus, d'une part, une entrée 60B de gaz d'échappement recirculés raccordée au circuit 26 et, d'autre part, une seconde sortie 60C raccordée à l'extrémité amont F1 des moyens de dérivation 44.

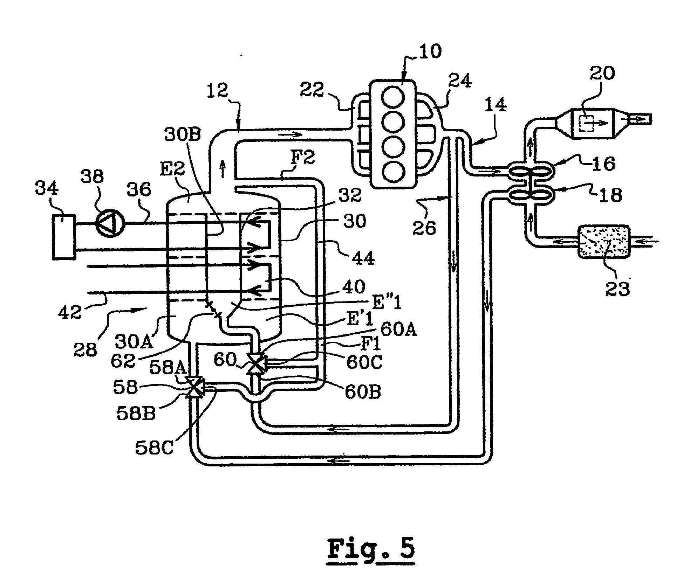

Dans les quatrième et cinquième modes de réalisation du dispositif de régulation 28 illustrés sur les figures 4 et 5, les moyens principaux 32 de canalisation de liquide caloporteur s'étendent dans les deux parties 30A, 30B de canalisation de l'air d'admission et des gaz recirculés.

Dans le cinquième mode de réalisation du dispositif de régulation 28 illustré sur la figure 5, l'échangeur principal 30 est muni de moyens 62 de mise en communication occasionnelle des deux parties de canalisation 30A, 30B de façon à autoriser, soit le passage d'un seul et même fluide à calo-réguler à la fois dans ces deux parties 30A, 30B, soit le mélange et le passage des deux fluides à calo-réguler à la fois dans ces deux parties 30A, 30B.

Le fluide à calo-réguler destiné occasionnellement à passer seul dans les deux parties de canalisation 30A, 30B à la fois est l'air d'admission. La mise en communication des deux parties 30A, 30B de l'échangeur principal permet, d'une part, d'augmenter l'échange thermique de l'air d'admission avec les liquides caloporteurs des moyens principaux 32 et secondaires 40 si bien que la température de l'air d'admission est abaissée plus efficacement et, d'autre part, de décrasser la seconde partie 30B de l'échangeur principal, destinée habituellement à la canalisation de gaz d'échappement recirculés.

On notera que, dans les troisième à cinquième modes de réalisation du dispositif de régulation 28 les moyens secondaires 40 de canalisation de liquide caloporteur s'étendent dans les deux parties de canalisation 30A, 30B de l'air d'admission et des gaz d'échappement recirculés.

On décrira ci-dessous quelques exemples de configurations de fonctionnement du dispositif de régulation thermique 28 selon les troisième à cinquième modes de réalisation de l'invention. Ces exemples montrent comment la température des fluides à calo-réguler peut être réglée en réglant le débit de la pompe 38 et les moyens de répartition 58, 60 influençant respectivement le débit de l'air d'admission et des gaz d'échappement recirculés à travers les moyens de dérivation 44. L'air d'admission et les gaz d'échappement recirculés sont mélangés à l'extrémité aval F2 des moyens de dérivation 44.

### Exemple 1 : Configuration du dispositif de régulation thermique 28 adaptée pour refroidir l'air d'admission et pour le roulage du véhicule à grande vitesse.

Dans ce cas, les moyens de répartition 58 sont réglés de façon à autoriser le passage d'air d'admission dans la première partie 30A de l'échangeur principal 30 et interdire le passage cet air d'admission dans les moyens de dérivation 44. L'air d'admission est ainsi refroidi. Les moyens de répartition 60 sont réglés de façon à interdire le passage de gaz d'échappement recirculés dans la seconde partie 30B de l'échangeur principal 30 et les moyens de dérivation 44. Le débit de la pompe 38 du circuit principal est réglé au maximum.

Dans le cas du cinquième mode de réalisation, les moyens de mise en communication 62 sont ouverts.

### Exemple 2 : Configuration du dispositif de régulation thermique 28 adaptée pour refroidir l'air d'admission et pour le roulage du véhicule en ville.

Dans ce cas, à la différence de l'exemple 1, les moyens de répartition 60 sont réglés de façon à autoriser le passage de gaz d'échappement recirculés dans la seconde partie 30B de l'échangeur principal 30 et interdire le passage de gaz d'échappement recirculés dans les moyens de dérivation 44.

Dans le cas du cinquième mode de réalisation, les moyens de mise en communication 62 sont fermés.

### Exemple 3 : Configuration du dispositif de régulation thermique 28 adaptée pour réchauffer l'air d'admission, notamment dans un but de régénération du filtre à particules 20.

Dans ce cas, les moyens de répartition 58 sont réglés de façon à autoriser le passage d'air d'admission dans les moyens de dérivation 44. Les moyens de répartition 60 sont réglés de façon à interdire le passage de gaz d'échappement recirculés dans la seconde partie 30B de l'échangeur principal 30 et les moyens de dérivation 44. Le débit de la pompe 38 est réglé au minimum.

Dans le cas du cinquième mode de réalisation, les moyens de mise en communication 62 sont fermés.

### Exemple 4 : Configuration du dispositif de régulation thermique 28 adaptée pour réchauffer l'air d'admission, notamment dans un but de régénération du filtre à particules 20, et pour mélanger des gaz d'échappement recirculés à l'air d'admission.

Dans ce cas, à la différence de l'exemple 3, les moyens de répartition 60 sont réglés de façon à autoriser le passage de gaz d'échappement recirculés dans les moyens de dérivation 44.

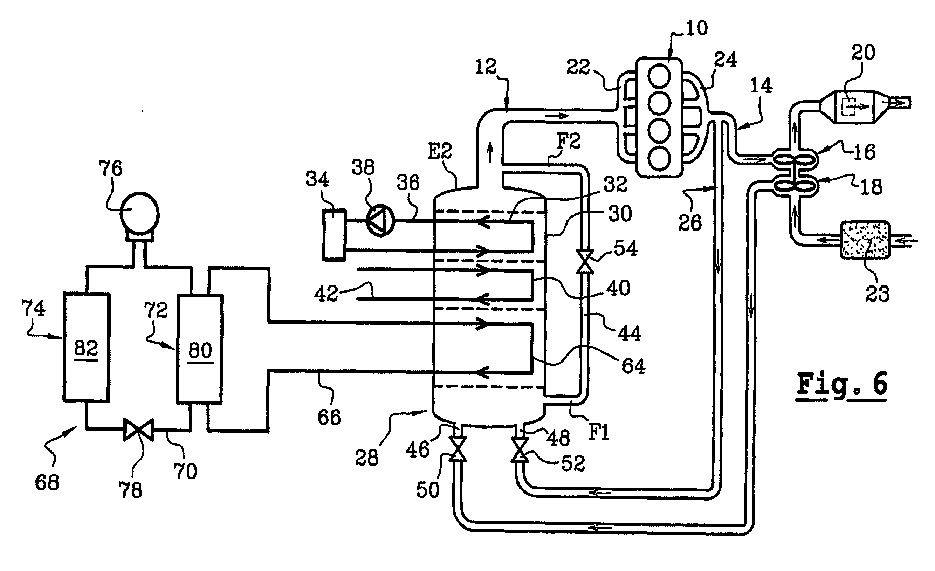

Sur la figure 6, on a représenté un dispositif de régulation thermique 28 selon un sixième mode de réalisation de l'invention.

Dans ce cas, l'échangeur thermique principal 30 est muni de moyens supplémentaires 64 de canalisation d'un fluide caloporteur pour échange thermique avec un mélange d'air d'admission et de gaz d'échappement recirculés. En variante, les moyens supplémentaires 64 pourraient n'être en échange thermique qu'avec un seul des fluides à calo-réguler parmi l'air d'admission et les gaz d'échappement recirculés.

Les moyens supplémentaires 64 sont raccordés à un circuit 66 de fluide dit très froid.

Dans l'exemple illustré sur la figure 6, le circuit 66 est un circuit de liquide caloporteur couplé thermiquement à une pompe à chaleur 68 de type classique.

La pompe à chaleur 68 comporte un circuit 70 de fluide frigorigène, de type à compression, prélevant des calories d'une source froide 72 pour les transférer au moins partiellement vers une source chaude 74.

Les sources froide 72 et chaude 74 sont raccordées entre elles par un compresseur 76 et une vanne de détente 78.

La source froide 72 comporte un échangeur thermique 80 fluide frigorigène/liquide caloporteur très froid, dit évaporateur. La source chaude 74 comprend un échangeur thermique 82 fluide frigorigène/air, dit condenseur.

Le circuit 66 de fluide très froid permet, le cas échéant, d'accélérer le refroidissement de l'air d'admission ou du mélange d'air d'admission et de gaz recirculés traversant l'échangeur principal 30.

L'invention ne se limite pas aux modes de réalisation décrits ci-dessus.

En particulier le circuit 12 d'air d'admission pourrait être équipé de résistances électriques participant au chauffage de l'air d'admission ou remplaçant le circuit secondaire 42.

En effet, en saison très froide, l'ensemble turbo-compresseur étant à l'arrêt, la température de l'air d'admission arrivant dans l'échangeur principal est relativement faible. Les résistances électriques permettent de chauffer cet air d'admission s'il est nécessaire de régénérer le filtre à particules alors que la température du liquide circulant dans le circuit secondaire 42 est faible (ce qui est le cas notamment en phase de démarrage du moteur à combustion interne).

## Revendications

1. Dispositif de régulation thermique de l'air d'admission d'un moteur à combustion interne (10) de véhicule automobile, formant un premier fluide à calo-réguler et de gaz d'échappement recirculés emis par le moteur (10), formant un second fluide à calo-réguler, du type comprenant:
- un échangeur thermique principal (30) muni de moyens (32, 40) de canalisation de liquide caloporteur pour échange thermique avec au moins un des fluides à calo-réguler, et
- des moyens (44) de dérivation de cet échangeur principal (30) dans lesquels est destiné à circuler un mélange d'air d'admission et de gaz d'échappement recirculés comprenant une extrémité amont et une extrémité aval raccordées respectivement en amont et en aval de l'échangeur principal,
**caractérisé en ce que** ces moyens (32, 40) de canalisation de liquide caloporteur comprennent :
- des moyens principaux (32) de canalisation de liquide caloporteur raccordés à un échangeur thermique (34) liquide caloporteur/air, dit échangeur froid (34), par l'intermédiaire d'un circuit principal (36) de liquide caloporteur, et
- des moyens secondaires (40) de canalisation de liquide caloporteur pour échange thermique avec au moins un des fluides à calo-réguler, ces moyens de canalisation secondaires (40) étant raccordés à un circuit secondaire (42) dans lequel circule un liquide caloporteur destiné au refroidissement du moteur à combustion interne.

2. Dispositif selon la revendication 1, **caractérisé en ce que** le liquide caloporteur est mis en circulation dans le circuit principal (36) par une pompe (38), de préférence electrique.

3. Dispositif selon la revendication 1 ou 2, **caractérisé en ce que** l'échangeur thermique principal (30) est muni d'une partie de canalisation commune des deux fluides à calo-réguler.

4. Dispositif selon la revendication 3, **caractérisé en ce que** la partie de canalisation commune comporte une extrémité amont (E1) raccordée, à la fois, à une arrivée (46) d'air d'admission, une arrivée (48) de gaz d'échappement recirculés et une extrémité amont (F1) des moyens de dérivation (44).

5. Dispositif selon la revendication 4, **caractérisé en ce que** l'arrivée (46) d'air d'admission, l'arrivée (48) de gaz d'échappement recirculés et l'extrémité amont (F1) des moyens de dérivation (44) sont munis chacun de moyens (50, 52, 54) de réglage du débit du fluide qui les traverse.

6. Dispositif selon la revendication 3, **caractérisé en ce que** la partie de canalisation commune comporte une extrémité amont (E1) raccordée à une première sortie (56A) de moyens (56) de répartition d'un mélange d'air d'admission et de gaz d'échappement recirculés, ces moyens de répartition (56) du mélange comprenant de plus, d'une part, une entrée (56B) commune à des arrivées (46, 48) d'air d'admission et de gaz d'échappement recirculés et, d'autre part, une seconde sortie (56C) raccordée à une extrémité amont (F1) des moyens de dérivation (44), l'arrivée (48) de gaz d'échappement recirculés étant munie de moyens (52) de réglage du débit de gaz recirculés.

7. Dispositif selon la revendication 1 ou 2, **caractérisé en ce que** l'échangeur thermique principal (30) est muni de deux parties (30A, 30B) destinées à canaliser chacune un fluide à calo-réguler séparément de l'autre fluide à calo-réguler.

8. Dispositif selon la revendication 7, **caractérisé en ce que** l'échangeur thermique principal (30) est muni de moyens (58) de mise en communication occasionnelle des deux parties de canalisation (30A, 30B) de façon à autoriser, soit le passage d'un seul et même fluide à calo-réguler à la fois dans ces deux parties (30A, 30B), soit le mélange et le passage des deux fluides à calo-réguler à la fois dans ces deux parties (30A, 30B).

9. Dispositif selon la revendication 8, **caractérisé en ce que** le fluide à calo-réguler autorisé à passer seul dans les deux parties de canalisation (30A, 30B) à la fois est l'air d'admission.

10. Dispositif selon l'une quelconque des revendications 7 à 9, **caractérisé en ce que** les moyens principaux (32) de canalisation de liquide caloporteur ne s'étendent que dans la partie (30A) de canalisation de l'air d'admission.

11. Dispositif selon l'une quelconque des revendications 7 à 9, **caracterisé en ce que** les moyens principaux (32) de canalisation de liquide caloporteur s'étendent dans les deux parties (30A, 30B) de canalisation de l'air d'admission et des gaz recirculés.

12. Dispositif selon l'une quelconque des revendications 7 à 11, **caractérisé en ce que** les moyens secondaires (40) de canalisation de liquide caloporteur s'étendent dans les deux parties (30A, 30B) de canalisation de l'air d'admission et des gaz d'échappement recirculés.

13. Dispositif selon l'une quelconque des revendications 7 à 12, **caractérisé en ce que** la partie (30A) de canalisation de l'air d'admission comporte une extrémité amont (E'1) raccordée à une première sortie (58A) de moyens (58) de répartition d'air d'admission, ces moyens (58) de répartition de l'air d'admission comprenant de plus, d'une part, une entrée (58B) d'air d'admisision et d'autre part, une seconde sortie (58C) raccordée a une extrémité amont (F1) des moyens de dérivation (44).

14. Dispositif selon l'une quelconque des revendications 7 à 13, **caractérisé en ce que** la partie de canalisation des gaz d'échappement recirculés comporte une extrémité amont (E"1) raccordée à une première sortie (60A) de moyens (60) de répartition de gaz d'échappement recirculés, ces moyens (60) de réparation de gaz recirculés comprenant de plus, d'une part, une entrée (60B) de gaz d'échappement recirculés et, d'autre part, une seconde sortie (60C) raccordée à une extrémité amont (F1) des moyens de dérivation (44).

15. Dispositif selon l'une quelconque des revendications précédentes, **caractérisé en ce que** l'echangeur thermique principal (30) est muni de moyens supplémentaires (64) de canalisation de fluide caloporteur pour échange thermique avec au moins un des fluides à calo-réguler, ces moyens de canalisation supplémentaires (64) étant raccordés à un circuit (66) de fluide dit très froid.

16. Dispositif selon la revendication 15, **caractérisé en ce que** le circuit de fluide très froid est couplé thermiquement à une pompe à chaleur (68).

17. Dispositif selon l'une quelconque des revendications précédentes, **caractérisé en ce que** l'air d'admission :est entraîné, à une pression supérieure à la pression atmosphérique, à travers l'échangeur thermique principal (30) par un ensemble turbo-compresseur muni d'une turbine (16) entraînée par les gaz d'échappement du moteur à combustion interne.

18. Dispositif selon l'une quelconque des revendications précédentes, **caractérisé en ce que** le moteur à combustion interne (10), par exemple de type Diesel, est raccordé à un circuit d'échappement (14) muni d'un filtre à particules (20).

19. Dispositif selon l'une quelconque des revendications précédentes, **caractérisé en ce que** le liquide caloporteur est un mélange d'eau et d'antigel.

## Claims

1. A temperature regulation device for regulating the temperature of the air for admission to an internal combustion engine (10) of a motor vehicle, the air forming a first fluid to be temperature regulated, and for regulating the temperature of recirculated exhaust gas emitted by the engine (10), the exhaust gas forming a second fluid to be temperature regulated, the device being of the type comprising:
· a main heat exchanger (30) provided with means (32, 40) for channeling heat transfer liquid for heat exchange with at least one of the fluids to be temperature regulated; and
· bypass means (44) for bypassing said main heat exchanger (30) by conveying a flow of a mixture of admission air and of recirculated exhaust gas, the bypass means comprising an upstream end and a downstream end respectively connected upstream and downstream of the main heat exchanger,
the device being **characterized in that** said means (32, 40) for channeling the heat transfer liquid comprise:
· main heat transfer liquid channeling means (32) connected via a main heat transfer liquid circuit (36) to a heat transfert liquid/air heat exchanger (34), called cold heat exchanger (34); and
· secondary heat transfer liquid channeling means (40) for exchanging heat with at least one of the fluids to be temperature regulated, said secondary channeling means (40) being connected to a secondary circuit (42) in which there circulates a heat transfer liquid for cooling the internal combustion engine.

2. A device according to claim 1, **characterized in that** the heat transfer liquid is circulated in the main circuit (36) by a pump (38), preferably an electric pump.

3. A device according to claim 1 or 2, **characterized in that** the main heat exchanger (30) is provided with a portion of channel that is common to both fluids to be temperature regulated.

4. A device according to claim 3, **characterized in that** the common portion of channel has an upstream end (E1) connected simultaneously to an admission air inlet (46), a recirculating exhaust gas inlet (48), and an upstream end (F1) of the bypass means (44).

5. A device according to claim 4, **characterized in that** each of the admission air inlet (46), the recirculated exhaust gas inlet (48), and the upstream end (F1) of the bypass means (44) is provided with respective means (50, 52, 54) for adjusting the flow rate of the fluid passing therethrough.

6. A device according to claim 3, **characterized in that** the common channel portion has an upstream end (E1) connected to a first outlet (56A) of means (56) for sharing a mixture of admission air and of recirculated exhaust gas, said means (56) for sharing the mixture further comprising firstly an inlet (56B) common to the admission air and recirculated exhaust gas inlet (46, 48), and secondly a second outlet (56C) connected to an upstream end (F1) of the bypass means (44), the recirculated exhaust gas inlet (48) being provided with means (52) for adjusting the flow rate of the recirculated gas.

7. A device according to claim 1 or 2, **characterized in that** the main heat exchanger (30) is provided with two portions (30A, 30B) each for channeling one of the fluids to be temperature regulated separately from the other fluid to be temperature regulated.

8. A device according to claim 7, **characterized in that** the main heat exchanger (30) is provided with means (58) for putting the two channel portions (30A, 30B) occasionally into communication in order either to allow a single fluid to be temperature regulated to flow simultaneously in both portions (30A, 30B), or else to allow the two fluids to be temperature regulated to be mixed together and passed through said two portions (30A, 30B) simultaneously.

9. A device according to claim 8, **characterized in that** the fluid to be temperature regulated that is allowed to pass alone through both channel portions simultaneously (30A, 30B) is admission air.

10. A device according to any one of claims 7 to 9, **characterized in that** the main heat transfer liquid channeling means (32) extend only in the admission air channeling portion (30A).

11. A device according to any one of claims 7 to 9, **characterized in that** the main heat transfer liquid channeling means (32) extend in both portions (30A, 30B) for channeling admission air and for channeling recirculated gas.

12. A device according to any one of claims 7 to 11, **characterized in that** the secondary heat transfer liquid channeling means (40) extend in both portions (30A, 30B) for channeling admission air and for channeling recirculated exhaust gas.

13. A device according to any one of claims 7 to 12, **characterized in that** the portion (30A) for channeling admission air has an upstream end (E'1) connected to a first outlet (58A) of the means (58) for sharing admission air, said means (58) for sharing admission air further comprising firstly an admission air inlet (58B), and secondly a second outlet (58C) connected to an upstream end (F1) of the bypass means (44).

14. A device according to any one of claims 7 to 13, **characterized in that** the portion for channeling recirculated exhaust gas has an upstream end (E"1) connected to a first outlet (60A) of means (60) for sharing recirculated exhaust gas, said means (60) for sharing recirculated gas further comprising firstly a recirculated exhaust gas inlet (60B) and secondly a second outlet (60C) connected to an upstream end (F1) of the bypass means (44).

15. A device according to any one of preceding claim, **characterized in that** the main heat exchanger (30) is provided with additional heat transfer fluid channeling means (64) for heat exchange with at least one of the fluids to be temperature regulated, said additional channeling means (64) being connected to a fluid circuit (66) called very cold fluid circuit.

16. A device according to claim 15, **characterized in that** the very cold fluid circuit is thermally coupled to a heat pump (68).

17. A device according to any one of preceding claim, **characterized in that** the admission air is driven at a pressure higher than atmospheric pressure through the main heat exchanger (30) by a turbine and compressor unit having a turbine (16) that is driven by the exhaust gas from the internal combustion engine.

18. A device according to any one of preceding claim, **characterized in that** the internal combustion engine (10), e.g. of the diesel type, is connected to an exhaust circuit (14) provided with a particle filter (20).

19. A device according to any one of preceding claim, **characterized in that** the heat transfer liquid is a mixture of water and antifreeze.

## Patentansprüche

1. Vorrichtung zur Wärmeregelung der Ansaugluft einer Verbrennungskraftmaschine (10) eines Kraftfahrzeugs, die ein erstes einer Wärmeregelung zu unterziehendes Fluid bildet, und von rückgeführten Abgasen, die von dem Motor (10) emittiert werden und die ein zweites einer Wärmeregelung zu unterziehendes Fluid bilden, des Typs, welcher umfasst:
- einen Hauptwärmetauscher (30), der mit Mitteln (32, 40) zur Leitung von Wärmeträgerflüssigkeit für einen Wärmeaustausch mit wenigstens einem der einer Wärmeregelung zu unterziehenden Fluide ausgestattet ist, und
- Mittel (44) zur Umgehung dieses Hauptwärmetauschers (30), in welchen ein Gemisch von Ansaugluft und rückgeführten Abgasen dazu bestimmt ist zu zirkulieren, welche ein stromaufwärts befindliches Ende und eine stromabwärts befindliches Ende umfassen, die vor bzw. nach dem Hauptwärmetauscher angeschlossen sind,
**dadurch gekennzeichnet, dass** diese Mittel (32, 40) zur Leitung von Wärmeträgerflüssigkeit umfassen:
- Hauptmittel (32) zur Leitung von Wärmeträgerflüssigkeit, die über einen Wärmeträgerflüssigkeits-Hauptkreis (36) an einen Wärmetauscher (34) Wärmeträgerflüssigkeit/Luft, der "kalter Wärmetauscher" (34) genannt wird, angeschlossen sind, und
- sekundäre Mittel (40) zur Leitung von Wärmeträgerflüssigkeit für einen Wärmeaustausch mit wenigstens einem der einer Wärmeregelung zu unterziehenden Fluide, wobei diese sekundären Leitungsmittel (40) an einen Sekundärkreis (42) angeschlossen sind, in welchem eine Wärmeträgerflüssigkeit zirkuliert, die für die Kühlung der Verbrennungskraftmaschine bestimmt ist.

2. Vorrichtung nach Anspruch 1, **dadurch gekennzeichnet, dass** die Wärmeträgerflüssigkeit in dem Hauptkreis (36) durch eine Pumpe (38), die vorzugsweise eine elektrische Pumpe ist, in Zirkulation versetzt wird.

3. Vorrichtung nach Anspruch 1 oder 2, **dadurch gekennzeichnet, dass** der Hauptwärmetauscher (30) mit einem Leitungsabschnitt ausgestattet ist, der den zwei einer Wärmeregelung zu unterziehenden Fluiden gemeinsam ist.

4. Vorrichtung nach Anspruch 3, **dadurch gekennzeichnet, dass** der gemeinsame Leitungsabschnitt ein stromaufwärts befindliches Ende (E1) aufweist, das gleichzeitig an eine Zuleitung (46) von Ansaugluft, eine Zuleitung (48) von rückgeführten Abgasen und ein stromaufwärts befindliches Ende (F1) der Umgehungsmittel (44) angeschlossen ist.

5. Vorrichtung nach Anspruch 4, **dadurch gekennzeichnet, dass** die Zuleitung (46) von Ansaugluft, die Zuleitung (48) von rückgeführten Abgasen und das stromaufwärts befindliche Ende (F1) der Umgehungsmittel (44) jeweils mit Mitteln (50, 52, 54) zur Regelung des Durchflusses des Fluids, das sie durchströmt, ausgestattet sind.

6. Vorrichtung nach Anspruch 3, **dadurch gekennzeichnet, dass** der gemeinsame Leitungsabschnitt ein stromaufwärts befindliches Ende (E1) aufweist, das an einen ersten Ausgang (56A) von Mitteln (56) zur Verteilung eines Gemisches aus Ansaugluft und rückgeführten Abgasen angeschlossen ist, wobei diese Mittel zur Verteilung (56) des Gemisches außerdem einerseits einen gemeinsamen Eingang (56B) von Zuleitungen (46, 48) von Ansaugluft und von rückgeführten Abgasen und andererseits einen zweiten Ausgang (56C), der an ein stromaufwärts befindliches Ende (F1) der Umgehungsmittel (44) angeschlossen ist, umfassen, wobei die Zuleitung (48) von rückgeführten Abgasen mit Mitteln (52) zur Regelung des Durchflusses der rückgeführten Abgase ausgestattet ist.

7. Vorrichtung nach Anspruch 1 oder 2, **dadurch gekennzeichnet, dass** der Hauptwärmetauscher (30) mit zwei Abschnitten (30A), (30B) ausgestattet ist, die dazu bestimmt sind, jeweils ein einer Wärmeregelung zu unterziehendes Fluid getrennt von dem anderen einer Wärmeregelung zu unterziehenden Fluid zu leiten.

8. Vorrichtung nach Anspruch 7, **dadurch gekennzeichnet, dass** der Hauptwärmetauscher (30) mit Mitteln (58) ausgestattet ist, um die zwei Leitungsabschnitte (30A, 30B) gelegentlich miteinander kommunizieren zu lassen, um entweder den Durchfluss ein und desselben einer Wärmeregelung zu unterziehenden Fluids gleichzeitig in diesen zwei Abschnitten (30A, 30B) oder die Mischung und den Durchfluss der zwei einer Wärmeregelung zu unterziehenden Fluide gleichzeitig in diesen zwei Abschnitten (30A, 30B) zu ermöglichen.

9. Vorrichtung nach Anspruch 8, **dadurch gekennzeichnet, dass** das einer Wärmeregelung zu unterziehenden Fluid, dem es ermöglicht wird, allein durch die zwei Leitungsabschnitte (30A, 30B) zu strömen, die Ansaugluft ist.

10. Vorrichtung nach einem der Ansprüche 7 bis 9, **dadurch gekennzeichnet, dass** sich die Hauptmittel (32) zur Leitung von Wärmeträgerflüssigkeit nur in dem Abschnitt (30A) zur Leitung der Ansaugluft erstrecken.

11. Vorrichtung nach einem der Ansprüche 7 bis 9, **dadurch gekennzeichnet, dass** sich die Hauptmittel (32) zur Leitung von Wärmeträgerflüssigkeit in den beiden Abschnitten (30A, 30B) zur Leitung der Ansaugluft und der rückgeführten Abgase erstrecken.

12. Vorrichtung nach einem der Ansprüche 7 bis 11, **dadurch gekennzeichnet, dass** sich die sekundären Mittel (40) zur Leitung von Wärmeträgerflüssigkeit in den beiden Abschnitten (30A, 30B) zur Leitung der Ansaugluft und der rückgeführten Abgase erstrecken.

13. Vorrichtung nach einem der Ansprüche 7 bis 12, **dadurch gekennzeichnet, dass** der Abschnitt (30A) zur Leitung der Ansaugluft ein stromaufwärts befindliches Ende (E'1) aufweist, das an einen ersten Ausgang (58A) von Mitteln (58) zur Verteilung von Ansaugluft angeschlossen ist, wobei diese Mittel (58) zur Verteilung der Ansaugluft außerdem einerseits einen Eingang (58B) für Ansaugluft und andererseits einen zweiten Ausgang (58C), der an ein stromaufwärts befindliches Ende (F1) der Umgehungsmittel (44) angeschlossen ist, umfassen.

14. Vorrichtung nach einem der Ansprüche 7 bis 13, **dadurch gekennzeichnet, dass** der Leitungsabschnitt der rückgeführten Abgase ein stromaufwärts befindliches Ende (E"1) aufweist, das an einen ersten Ausgang (60A) von Mittel (60) zur Verteilung von rückgeführten Abgasen angeschlossen ist, wobei diese Mittel (60) zur Verteilung von rückgeführten Abgasen außerdem einerseits einen Eingang (60B) für rückgeführte Abgase und andererseits einen zweiten Ausgang (60C), der an ein stromaufwärts befindliches Ende (F1) der Umgehungsmittel (44) angeschlossen ist, umfassen.

15. Vorrichtung nach einem der vorhergehenden Ansprüche, **dadurch gekennzeichnet, dass** der Hauptwärmetauscher (30) mit zusätzlichen Mitteln (64) zur Leitung von Wärmeträgerfluid für den Wärmeaustausch mit wenigstens einem der einer Wärmeregelung zu unterziehenden Fluide ausgestattet ist, wobei diese zusätzlichen Leitungsmittel (64) an einen Fluidkreis (66) angeschlossen sind, der "sehr kalter Fluidkreis" genannt wird.

16. Vorrichtung nach Anspruch 15, **dadurch gekennzeichnet, dass** der sehr kalte Fluidkreis thermisch mit einer Wärmepumpe (68) gekoppelt ist.

17. Vorrichtung nach einem der vorhergehenden Ansprüche, **dadurch gekennzeichnet, dass** die Ansaugluft mit einem Druck, der höher ist als der atmosphärische Druck, von einer Turbokompressoranordnung, die mit einer Turbine (16) ausgestattet ist, die von den Abgasen der Verbrennungskraftmaschine angetrieben wird, durch den Hauptwärmetauscher (30) getrieben wird.

18. Vorrichtung nach einem der vorhergehenden Ansprüche, **dadurch gekennzeichnet, dass** die Verbrennungskraftmaschine (10), zum Beispiel ein Dieselmotor, an einen Abgaskreis (14) angeschlossen ist, der mit einem Partikelfilter (20) ausgestattet ist.

19. Vorrichtung nach einem der vorhergehenden Ansprüche, **dadurch gekennzeichnet, dass** die Wärmeträgerflüssigkeit ein Gemisch von Wasser und Gefrierschutzmittel ist.
